# EUROPEAN PATENT SPECIFICATION

(11) **EP 4 364 544 B1**
(45) Date of publication and mention of the grant of the patent: **20.05.2026**
(21) Application number: 23200767.4
(22) Date of filing: 29.09.2023
(51) Int. Cl.: A01B 69/04

(54) **PATH PLANNING FOR AN AGRICULTURAL FIELD BASED ON END OF SWATH DETECTION**
WEGPLANUNG FÜR EIN LANDWIRTSCHAFTLICHES FELD AUF BASIS DER SCHWADENENDERKENNUNG
PLANIFICATION DE TRAJET POUR UN CHAMP AGRICOLE SUR LA BASE D'UNE DÉTECTION DE FIN DE BANDE

(30) Priority: 02.11.2022 GB 202216301
(43) Date of publication of application: 08.05.2024
(73) Proprietor: AGCO International GmbH, 8212 Neuhausen am Rheinfall (CH)
(72) Inventor: Blume, Tobias, 87616 Marktoberdorf (DE)
(74) Representative: AGCO Intellectual Property Department

(56) References cited:
- EP-A1- 3 794 919
- EP-A1- 3 903 556
- US-A1- 2008 103 690
- US-A1- 2018 359 904
- US-A1- 2020 205 336
- US-A1- 2021 000 006

## Description

### FIELD

The present disclosure relates generally to planning of paths for example for a full field path plan used to treat an agricultural field by moving an agricultural machine along the paths defined in the full field path plan.

### BACKGROUND

U. S. patent application US 2020/205336 A1, "Improvements in or relating to tractor-baler combinations," published July 2, 2020, discloses a tractor having a sensor for sensing a swath line of crop material. Based on an output of the sensor, a steering mechanism of the tractor is operated such that a baler towed by the tractor follows the swath line in a manner aligning ingestion of crop material into the baler for baling. The sensor is operable to sense a swath line that is laterally offset from the direction of forward movement of the tractor. US2021/0000006A1 discloses a row detection method and vehicle control to move along a lane bounded by crop rows.

### BRIEF SUMMARY

It is an objective to plan paths for a field path plan of an agricultural field based on limited information of rows being on the agricultural field.

According to an aspect of the invention there is provided a method for path planning according to claim 1.

The sensor unit may comprise a camera, a LIDAR, a radar or any other device capable to detect rows in an agricultural field. The sensor unit may be mounted on an agricultural vehicle such as a tractor, a combine or any other vehicle so that the sensor unit moves with the vehicle. The rows may be windrows or crop rows. The rows may also be tramlines within the agricultural field. The rows may extend from one edge of the agricultural field to another edge, e. g. from one headland to another headland. Since each row has two ends each end may be located at different edges of the agricultural field, e. g. along a first segment of a field boundary of the agricultural field and a second segment of the field boundary. Due to the limited sensing range of the sensor unit, the sensor unit may detect an end of the row only when passing the row. The sensor unit may send the information of the detected ends of rows to a control unit to determine path segments matching with the ends of rows.

The method may comprise the steps of determining distances between the first path segments, determining distances between the second path segments and determining an additional first path segment between two adjacent first path segments if a distance between the two adjacent first path segments may be greater than one and a half times of a distance between two adjacent second path segments.

A distance between two path segments corresponds to the distance between two path segments matching with the two path segments. In general, it may be expected that the distances between the first and second ends of two rows may be approximately equal. Thus, it can be an indication of an existing row located between two other rows and being too short for detecting an end of this row by the sensor unit if a distance between two determined path segments is greater than expected, for example greater than one and a half times up to two times of a distance between two adjacent second path segments or greater. In such a case, an additional path segment may be added between the path segments being distant more than expected, for example in the middle of these both path segments for complementing of a possibly missing path segment.

The adjacent first path segments may be of the same order as the two adjacent second path segments.

A first path segment and a second path segment are of the same order if the number of path segments between the first path segment and an edge of the agricultural field, as for example a third edge, is the same as the number of path segments between the second path segment and the same edge. For example, the first path segment and the second path segment are both of the first order if no other path segment is between the third edge and the first and second path segment. The first path segment and the second path segment are both of the second order if only one other path segment is between the third edge and the first path segment and if only one other path segment is between the third edge and the second path segment, and so on. Accordingly, between a first path segment of first order and a first path segment of second order is no other first path segment but between a first path segment of first order and a first path segment of third order is another first path segment, namely the first path segment of second order. Same applies to the second path segments.

Hence, if the distances between two adjacent first path segments and second path segments of the same order are determined then path segments matching with end of rows belonging to potentially the same rows will be taken into account when the distances between the two path segments are determined.

The method may comprise the steps of determining a number of the first path segments, determining a number of the second path segments, determining the additional first path segment between two adjacent first path segments if the number of first path segments is smaller than the number of second path segments.

The control unit may count the first and second path segments to determine the number of the first path segment and the number of the second path segment and to compare both numbers. Thus, it may be an additional indication of an undetected end of row if the number of first path segments is different to the number of second path segments, especially if the edge of the agricultural field comprising the path segments with the distance being greater than expected and the edge comprising the less path segments are the same. Consequently, a potential missing end can be complemented by the additional path segment. Analogously, the control unit may determine an additional second path segment between two adjacent second path segments if the number of second path segments is smaller than the number of first path segments.

The control unit may comprise a machine learning method or a neuronal network. Both, the machine learning method and the neuronal network may be used to determine any path segment as the additional first or second path segment or an intermediate path segment between a first path segment and a second path segment.

The first and second ends of the rows are detected by the sensor unit without traversing any row by moving the sensor unit around the rows of the agricultural field.

The sensor unit may be moved in a closed loop around the agricultural field. The sensor unit may be moved parallel to a field boundary of the agricultural field. Thus, the rows won't be disturbed or damaged by the agricultural vehicle moving the sensor unit.

A first or a second path segment may be determined for an end of a row if the first or the second end is oriented different to a movement direction of the sensor unit at a moment the sensor unit detected the corresponding end of the row.

For example, the end of row may be oriented laterally in respect of the movement direction of the sensor unit to be detected as first or second end.

The method may comprise the step of determining at least two intermediate path segments each intermediate path segment connecting a first path segment with a second path segment of the same order as the first path segment.

For example, the control unit may determine an intermediate path segment connecting the first path segment of first order with the second path segment of first order and an intermediate path segment connecting the first path segment of second order with the second path segment of second order, and so on. Thus, the control unit may determine full paths for a field path plan according to a defined rule. The intermediate path segments may be A-B lines or may be of any other type.

The method may comprise the step of determining a reference path segment wherein an intermediate path segment connecting a first path segment with a second path segment of the same order as the first path segment may be parallel to the reference path segment.

The reference path segment may be of any type as for example an A-B line or a curved line. The reference path segment may consider obstacles located in the agricultural field as for example trees to avoid a collision of a vehicle travelling along the reference path segment. The reference path segment may be defined manually by an operator or may be determined automatically by the control unit.

The reference path segment may be an intermediate path segment connecting a first and a second path segment of a lower order than the order of the first and second path segment connected with the intermediate path segment being parallel to the reference path segment.

So, the control unit may be configured to determine the reference path segment prior to subsequent intermediate path segments for connecting first and second path segments being still unconnected.

The reference path segment may be determined by an extrapolation of a first path segment and an extrapolation of a second path segment of the same order as the first path segment wherein the extrapolation of the second path segment intersects the extrapolation of the first path segment.

If the first path segment and the second path segment are oriented in a different direction it is not possible to connect both path segments by an A-B line. Instead, a sharp bended or curved intermediate path segment is necessary to connect both path segments. Due to the extrapolation of the first and second path segment the control unit may determine a reference path segment having a sharp bend or a curve at a position of the intersection of the first and the second path segment. Then, the first and second path segments having a different direction may by connected with an intermediate path segment being parallel to the reference path segment.

The reference path segment may be oriented at least partly along a third edge of the agricultural field.

When rows are created in an agricultural field, e. g. by a windrower, the rows may follow typically a contour of a segment of a field boundary of the agricultural field. I. e. the rows may be parallel to a corresponding edge of the agricultural field. Thus, the control unit may consider the contour of the agricultural field for the determination of the reference path segment assuming that the rows of the agricultural field may be in alignment with an edge of the agricultural field.

The method may comprise the step of determining a travel path representing the movement of the sensor unit wherein the determination of the reference path segment may be based on the travel path.

The movement of the sensor unit may correlate with the movement of the vehicle. For example, the travel path may relate to a center point of the vehicle wherein the movement of the sensor unit may have a predefined offset from the center point. The control unit may detect that the sensor unit is moving along a row based on the sensor information of the row captured by the sensor unit and may track the route of the row. Thus, the control unit may determine the real route of a row based on the travel path and a sensed distance between the row and the travel path. Then, the control unit may determine a reference path segment correlating to the real route of the row. In case of minor deviations between the real route of the row and the travel path the reference path segment may be a segment of the travel path.

The method may comprise the steps of moving the sensor unit along a first intermediate path segment out of the determined intermediate path segments, detecting a row located next to the first intermediate path segment, checking whether a second intermediate path segment out of the determined intermediate path segments matches with the detected row wherein the second intermediate path segment may be connected with a first or second path segment matching with a first or second end of the row and reconnecting the second intermediate path segment with a first and a second path segment of different order in case of a mismatch between the second intermediate path segment and the detected row.

The control unit may determine that an intermediate path segment doesn't match with the real route of a row while the agricultural vehicle with the sensor unit traverses the agricultural field. Then, the control unit may update the field path plan by reconnecting the corresponding intermediate path segment with another first or second path segment. The first or second path segment with which the intermediate path segment is reconnected may have a higher order, e. g. increment of one, than the first or second path segment with which the intermediate path segments was connected before. For example, an intermediate path segment connected with a first path segment of second order and a second path segment of second order may be reconnected with a second path segment of third order instead of the second path segment of second order. Hence, the control unit may correct the field path plan.

The order of the first path segment of the reconnected second intermediate path segment may be higher than the order of the second path segment of the reconnected second intermediate path segment if a distance between the sensor unit and the detected row increases while the sensor unit moves along the first intermediate path segment or may be lower than the order of the second path segment of the reconnected second intermediate path segment if a distance between the sensor unit and the detected row decreases while the sensor unit moves along the first intermediate path segment.

The first and the second intermediate path segments may be parallel. When the sensor unit moves along the first intermediate path segment the sensor unit may detect a row located next to the first intermediate path segment and may determine a distance between the first intermediate path segment and the row. If the distance increases or decreases the control unit may interpret the deviation of the distance as an indication that the row is not parallel to the first intermediate path segment and thus may not match with the second intermediate path segment.

If a third intermediate path segment out of the determined intermediate path segments may be connected with a first or a second path segment connected with the second intermediate path segment, the method may comprise the steps of disconnecting the third intermediate path segment from the first or second path segment connected with both the third and the reconnected second intermediate path segment and reconnecting the third intermediate path segment with a first or second path segment of higher order than the order of the first or second path segment disconnected from the third intermediate path segment.

Due to the reconnection of the second intermediate path segment the reconnected second intermediate path segment may be connected to the same first or second path segment the third intermediate path segment is connected with. I. e. the reconnected second and the third intermediate path segment are not parallel. So, the control unit may reconnect the third intermediate path segment accordingly to route the third intermediate path segment parallel to the reconnected second intermediate path segment.

The method may comprise the step of determining a turn path segment for connecting a first path segment connected with one intermediate path segment with a first path segment connected with another intermediate path segment wherein at least one of the one and the another intermediate path segments may be connected with a second path segment.

An intermediate path segment may be connected with another intermediate path segment by a turn path segment to guide an agricultural vehicle from the one intermediate path segment to the other intermediate path segment when the agricultural vehicle reaches the end of the former intermediate path segment. The turn path segment may be determined in a headland of the agricultural field. The turn path segment may be connected with an intermediate path segment being connected with a first and a second path segment so that the vehicle can be guided from one edge of the agricultural field to the other edge of the agricultural field.

The method may comprise the steps of detecting a row without a match with an intermediate path segment, determining an additional intermediate path segment matching with the detected row, and connecting the additional intermediate path segment with a first or second path segment disconnected from any other intermediate path segment.

When the agricultural vehicle traverses the agricultural field the sensor unit may detect a row in the agricultural field for that an intermediate path segment hasn't been determined yet, for example in case of a reconnection of an intermediate path segment. Thus, the control unit may determine an additional intermediate path segment for that row to complete the field path plan. The additional intermediate path segment may be connected to a first or a second path segment without connection to any other intermediate path segment to avoid an intersection with another intermediate path segment connected with the same first or second path segment.

The method may comprise the step of detecting a gap in the detected row, and determining a closing path segment for closing the gap.

The gap may be detected by the sensor unit while the agricultural vehicle traverses the agricultural field. The sensor unit may detect a starting point and an end point of the gap so that the control unit may close the gap by determining a closing path segment from the starting point to the end point.

Individual steps of the method may be computer-implemented method steps. The computer-implemented method steps may be stored in a memory as for example a flash drive.

The control unit may be configured to carry out individual steps of the method. The control unit may carry out the steps in any order. The control unit may carry out a part of the steps only and may decide which steps to carry out and which not.

Another aspect includes a vehicle comprising the control unit and the sensor unit. The vehicle may be configured to carry out the method. The vehicle may be an agricultural vehicle.

Within the scope of this application it should be understood that the various aspects, embodiments, examples and alternatives set out herein, and individual features thereof may be taken independently or in any possible and compatible combination. Where features are described with reference to a single aspect or embodiment, it should be understood that such features are applicable to all aspects and embodiments unless otherwise stated or where such features are incompatible.

### BRIEF DESCRIPTION OF THE DRAWINGS

Several aspects of the invention will now be described, by way of example only, with reference to the accompanying drawings, in which:
FIG. 1 illustrates an agricultural field with some rows;
FIG. 2 illustrates schematically path segments for a field path plan;
FIG. 3 illustrates schematically path segments for a field path plan;
FIG. 4 illustrates schematically a field path plan;
FIG. 5 illustrates schematically a field path plan in comparison with the rows of FIG. 1;
FIG. 6 illustrates schematically an updated field path plan;
FIG. 7 illustrates schematically the updated field path plan of FIG. 6 with turn paths;
FIG. 8 illustrates schematically an updated field path plan in comparison with the rows of FIG. 1;
FIG. 9 illustrates an agricultural vehicle;
FIG. 10 illustrates a simplified view of a control unit of the vehicle shown in FIG. 9.
FIG. 11 illustrates a flow chart for a method for generating a field path plan.

### DETAILED DESCRIPTION

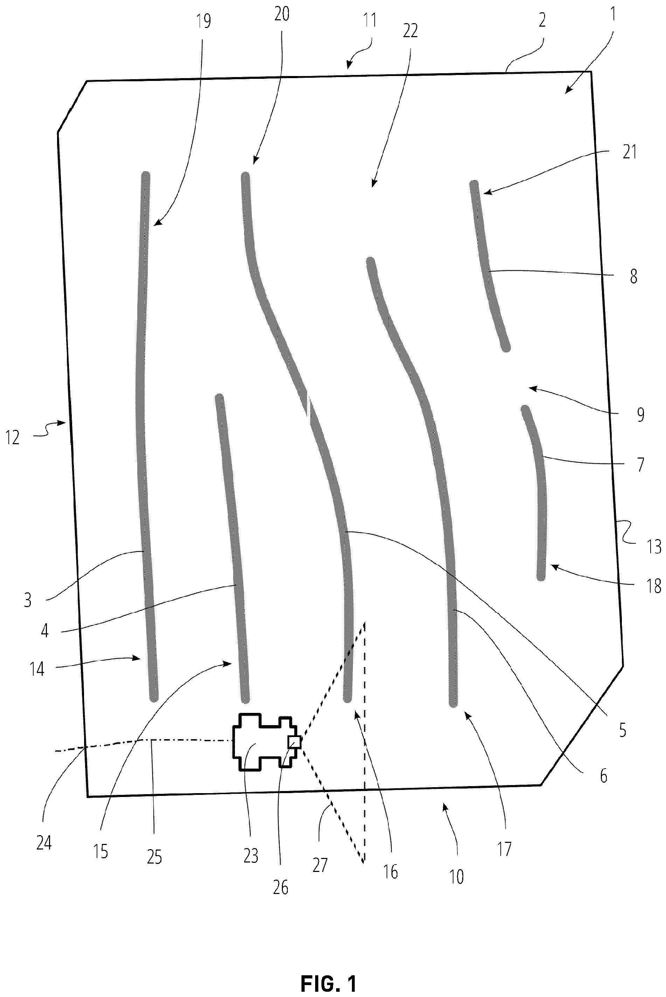

FIG. 1 shows an agricultural field 1 encompassed by a field boundary 2. The agricultural field has at least three edges as a first edge 10, a second edge 11 and a third edge 12. The edges 10 to 12 extend along segments of the field boundary 2. The first and the second edge 10 and 11 are part of a headland of the agricultural field 1. The agricultural field 1 comprises several rows 3, 4, 5, 6, 7 and 8. The rows 3 to 8 may be windrows of any crop material or crop rows not having been harvested yet. The rows 3 to 8 could also be tramlines of vehicles traversed the agricultural field 1.

The rows 3 to 8 comprise each a first end and a second end. Some of the first ends are located close to the first edge 10 as for example the first end 14 of row 3, the first end 15 of row 4, the first end 16 of row 5 and the first end 17 of row 6. Analogously, some of the second ends are located close to the second edge 11 as for example the second end 19 of row 3, the second end 20 of row 5 and the second end 21 of row 8. Rows 4 and 6 are too short so that their second ends do not reach to the second edge 11. Accordingly, numeral 22 indicates a missing end 22 of row 6. Row 7 is too short so that its first end 18 doesn't reach to the first edge 10. Rows 7 and 8 may be parts of a non-continuous row having a gap 9.

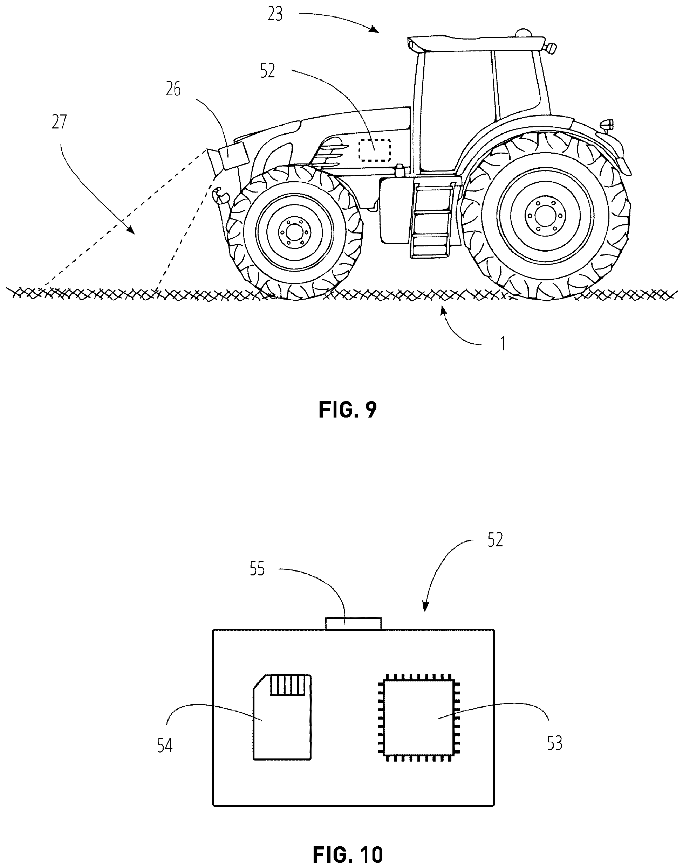

A vehicle 23 has entered the agricultural field 1 at an entry point 24 and moved along a travel path 25. The vehicle 23 may be an agricultural vehicle as shown in FIG. 9 and may be a tractor, a combine or a sprayer. The vehicle 23 comprises a sensor unit 26 having a sensing range 27 and a control unit 52.

The sensor unit 26 may be any device configured to detect the rows 3 to 8 within its sensing range 27 such as a camera, a LIDAR, a radar sensor or an ultrasonic sensor. The sensing range 27 may be the field of view of a camera, for example. Since the sensor unit 26 is fixed to the vehicle 23 the sensor unit 26 moves together with the vehicle 23. Thus, the travel path 25 represents a movement of the sensor unit 26, too. The sensor unit 26 is connected with the control unit 52 to transfer sensor signals to the control unit 52.

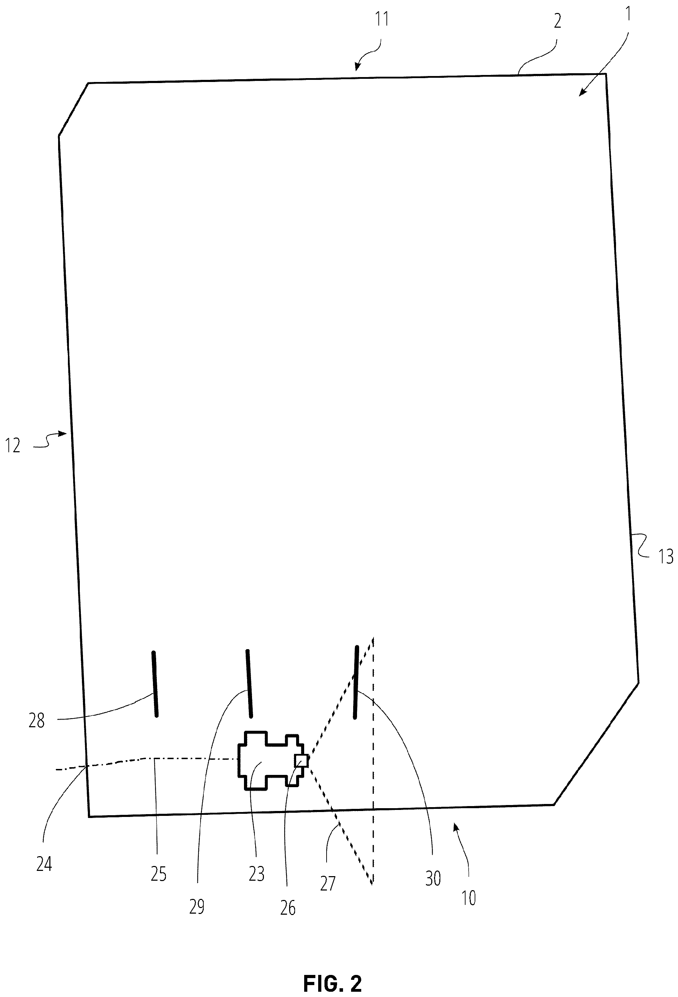

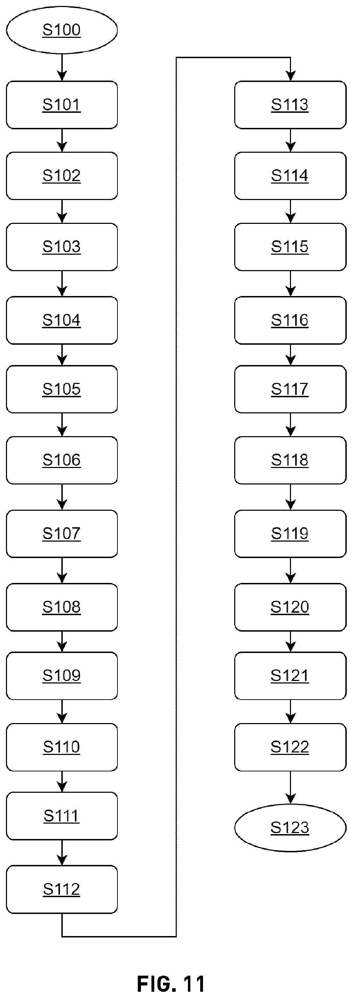

The control unit 52 carries out a method as depicted in FIG. 11 to generate a field path plan as schematically depicted in FIG. 2 to FIG. 4, FIG. 6 and FIG. 7. The method starts with step S100 and proceeds to step S101 for moving the sensor unit 26 having a limited sensing range 27 in the agricultural field 1 for detecting the rows 3 to 8. The sensor unit 26 attached to the vehicle 23 moves around the rows 3 to 8 of the agricultural field 1 without traversing any row 3 to 8 to avoid any disturbance of the rows 3 to 8. While the vehicle 23 moves around the rows 3 to 8 the sensor unit 26 detects the ends of the rows to determine path segments matching with the ends for the field path plan.

The method proceeds to step S102 to detect first ends 14 to 17 of rows 3 to 6 located at the first edge 10 of the agricultural field 1. As can be seen in FIG. 1, vehicle 23 moves along the first edge 10 and the sensor unit 26 has detected the first ends 14 to 16 of the rows 3 to 5 reaching to the first edge 10.

The method proceeds to step S103 for determining first path segments 28 to 31 wherein each first path segment 28 to 31 matches with a first end 14 to 17. As can be seen in FIG. 2, the control unit 52 determined for the field path plan a first path segment 28 matching with the first end 14, a first path segment 29 matching with the first end 15 and another first path segment 30 matching with the first end 16 according to the progress as shown in FIG. 1.

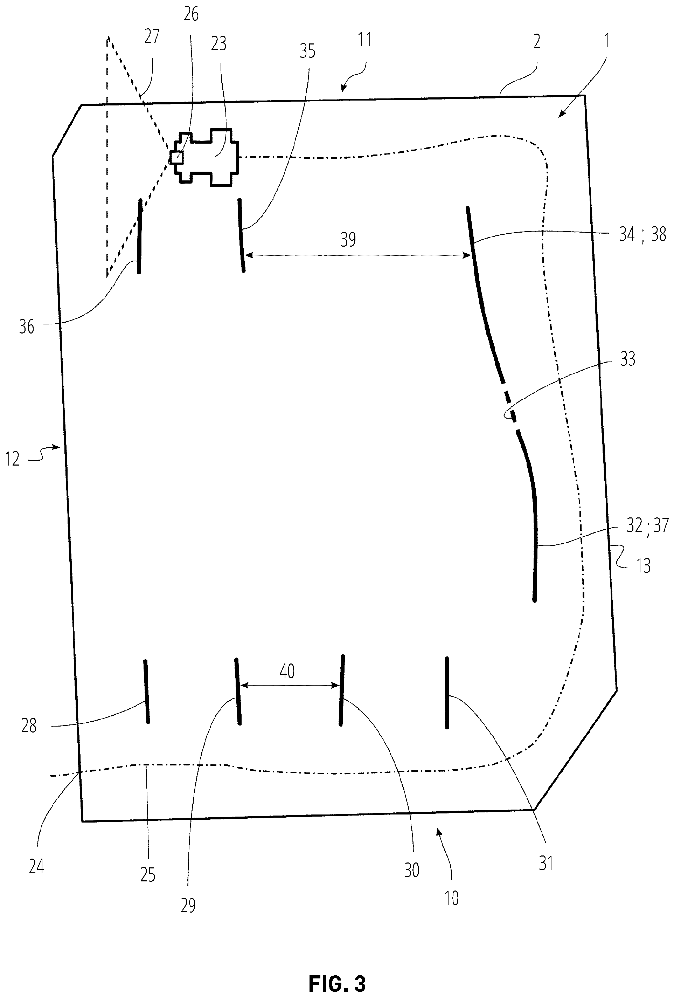

The vehicle 23 moves further and reaches a position as depicted in FIG. 3. So, the sensor unit 26 moved along a boundary segment 13 of the agricultural field 1 and along the second edge 11. During this procedure, the sensor unit 26 detected the first end 17 and the control unit 52 determined a first path segment 31 matching with the first end 17 as described above. The sensor unit 26 detected also the rows 7 and 8 as well as the gap 9 between the rows 7 and 8. The rows 7 and 8 have been detected in full length since the sensing range 27 of the sensor unit 26 could cover the rows 7 and 8 completely when the sensor unit 26 passed the rows 7 and 8. Based on the detected rows 7, the control unit 52 determined a first path segment 32 matching with a first end 18 of the row 7 as can be seen in FIG. 3. In addition, the control unit 52 determined a path 37 matching with the row 7 and a path 38 matching with the row 8.

The control unit 52 may determine a first or a second path segment for an end of a row if the first or the second end 14 to 17 or 19 to 21 is oriented different to a movement direction of the sensor unit 26 at a moment the sensor unit 26 detected the corresponding end of the row. So, the control unit 52 may not determine the first path segment 32 for the first end 18 since the first end 18 is oriented along the movement direction of the sensor unit 26 when moving along the boundary segment 13. In contrast, the first ends 14 to 17 are oriented laterally to the movement direction of the sensor unit 26 when moving along the first edge 10 as well as the second ends 19 to 21 when the sensor unit 26 moves along the second edge 11.

As can be seen in FIG. 3 in connection with FIG. 1, the method proceeded to step S104 for detecting second ends 19 to 21 of the rows 3, 5 and 8 located at the second edge 11 of the agricultural field 1 and proceed to step S105 for determining second path segments 34 to 36 wherein each second path segment 34 to 36 matches with a second end 19 to 21. Since row 6 is too short to reach the second edge 11 the sensor unit 26 couldn't detect an end of the row 6 when the sensor unit 26 moved along the second edge 11 of the agricultural field 1. Thus as can be seen in FIG. 3, the control unit 52 determined for the field path plan a second path segment 34 matching with the second end 21 of row 8, a second path segment 35 matching with the second end 20 of row 5 and a second path segment 36 matching with the second end 19 of row 3.

At this point, the control unit 52 determined four first path segments 28 to 31 located at the first edge 10 and three second path segments 34 to 36 located at the second edge 11. To distinguish a first path segment from each another the first path segments are classified according to their subsequent order beginning from an edge of the agricultural field as for example the third edge 12. For example, first path segment 28 is the first path segment of first order, first path segment 29 is the first path segment of second order, first path segment 30 is the first path segment of third order and so on. Analogously, the second path segments can be classified wherein their subsequent order begins from the same edge as the order of the first path segments, i. e. from the third edge 12. Thus, second path segment 36 is the second path segment of first order, second path segment 35 is the second path segment of second order and second path segment 34 is the second path segment of third order.

Optionally, the method proceeds to step S106 to close the gap 9 with a closing path segment 33. The control unit 52 may receive the information of the gap 9 from the sensor unit 26 and determine a closing path segment 33 connecting the paths 37 and 38 together. As can be seen in FIG. 3, the gap 9 may be closed by the closing path segment 33.

The method proceeds to step S107 and the control unit 52 determines distances between the first path segments (28 to 31) as well as distances between the second path segments (34 to 36). For example, the control unit 52 determines a first distance 40 between the first path segment of second order 29 and the first path segment of third order 30 and a second distance 39 between the second path segment of second order 35 and the second path segment of third order 34 as depicted in FIG. 3. The control unit 52 may determine additional distances as a distance between the first path segments of first and second order 28 and 29, a distance between the first path segments of third and fourth order 30 and 31 as well as a distance between the second path segments of first and second order 36 and 35.

The method proceeds to step S108 and the control unit 52 checks if one of the distances between the adjacent first path segments is greater than a predefined factor of a distance between the adjacent second path segments as well as if one of the distances between the adjacent second path segments is greater than a predefined factor of a distance between the adjacent first path segments. The control unit 52 also considers the orders of the path segments so that the orders of the two adjacent first path segments are the same as the orders of the two adjacent second path segments.

The predefined factor may be any value greater than one, for example one and a half (1,5), one and three forth (1,75), two (2,0) or any other value greater than one (1,0). It is assumed now that the predefined factor is set to one and a half. For example, the control unit 52 compares the distance 40 between the adjacent first path segments 29 and 30 with the distance 39 between the adjacent second path segments 35 and 34. The adjacent first path segments 29 and 30 are of the first and second order which are the same orders as the orders of the adjacent second path segments 35 and 34. Then, the control unit 52 determines that the second distance 39 is greater than one and a half of the first distance 40. I. e. the second distance 39 may be deemed to be greater than expected so that this circumstance may be an indication of a missing end 22 of the row 6 (see FIG. 1).

The method proceeds to step S109 and the control unit 52 determines a number of the first path segments 28 to 31 and a number of the second path segments 34 to 36. So, the control unit 52 counts four first path segments and three second path segments. Additionally, the control unit 52 recognizes that the number of second path segments is smaller than the number of first path segments. I. e. the number of the second path segments is less than expected to connect every first path segment with a corresponding second path segment so that this circumstance may be an additional indication of a missing end 22 of the row 6.

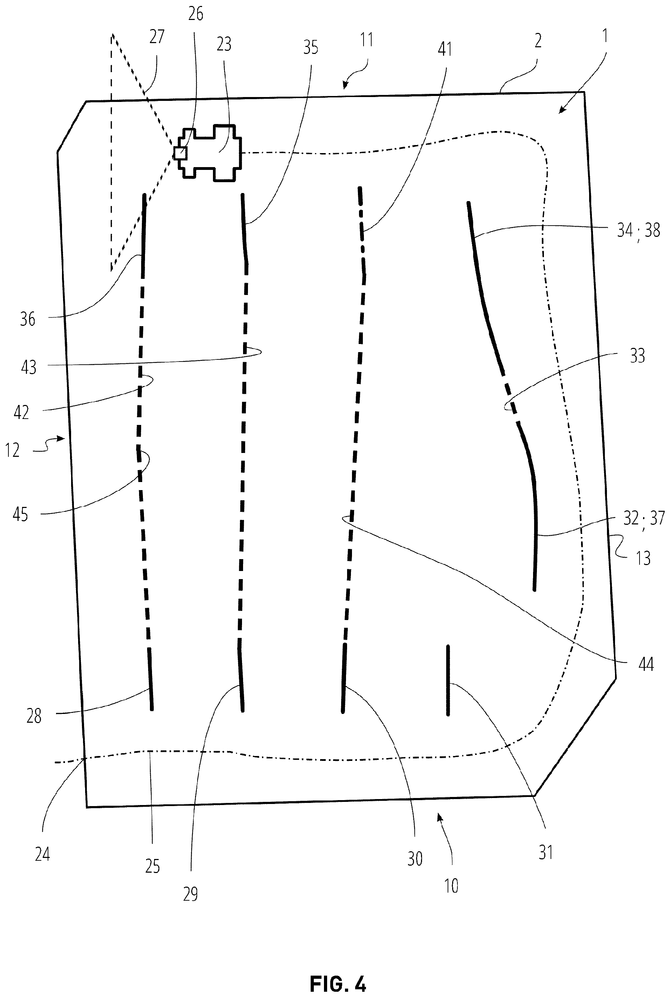

Then, the method proceeds to step S110 and the control unit 52 determines an additional second path segment 41 between the two adjacent second path segments 34 and 35 as can be seen in FIG. 4. The additional path segment may be determined if at least one of the two indications of a missing end 22 is given. The additional second path segment 41 may be in the middle between the second path segments 35 and 34. Since an additional second path segment has been added the order of the second path segments changes wherein the order of the second path segments is updated by the control unit 52 accordingly. Thus, the additional second path segment 41 is the second path segment of third order and the second path segments 34 is the second path segment of fourth order.

The method proceeds to step S111 and the control unit 52 determines intermediate path segments to connect a first path segment with a second path segment having the same order as the order of the first path segment. As can be seen in FIG. 4, the control unit 52 determines an intermediate path segment 42 to connect the first path segment of first order 28 with the second path segment of first order 36, an intermediate path segment 43 to connect the first path segment of second order 29 with the second path segment of second order 35 and an intermediate path segment 44 to connect the first path segment of third order 30 with the second path segment of third order 41.

The intermediate path segments may be A-B lines connecting their corresponding first and second path segments, as for example intermediate path segments 43 and 44 (see FIG. 4). Alternatively, the intermediate path segment 42, 43 or 44 may be a line of another type. For example, at least one of the intermediate path segments 42, 43 and 44 can be parallel to a reference path segment the control unit 52 has determined in a separate method step.

The reference path segment can be determined by the control unit 52 in different ways. For example, control unit 52 can define any (intermediate) path segment as the reference path segment as for example path 37 or path 38 (see FIG. 4). Optionally, the (intermediate) path segment defined as reference path segment may be connected with first and second path segments of lower order (e. g. intermediate path segment 42 connected with first path segment 28 and second path segment 36) than the intermediate path segments being parallel to the reference path segment. Alternatively, the control unit 52 can determine the reference path segment based on an extrapolation of a first path segment, e. g. first path segment 28, and an extrapolation of a second path segment having the same order as the first path segment, e. g. second path segment 36, wherein the extrapolation of the second path segment intersects the extrapolation of the first path segment in an intersection point 45 (see FIG. 4). Alternatively, the control unit 52 can determine a reference path segment being oriented at least partly along an edge of the agricultural field 1, e. g. the third edge 12 of the agricultural field 1. Alternatively, the control unit 52 can determine the travel path 25 representing the movement of the sensor unit 26 and define a segment of the travel path 25 as the reference path segment.

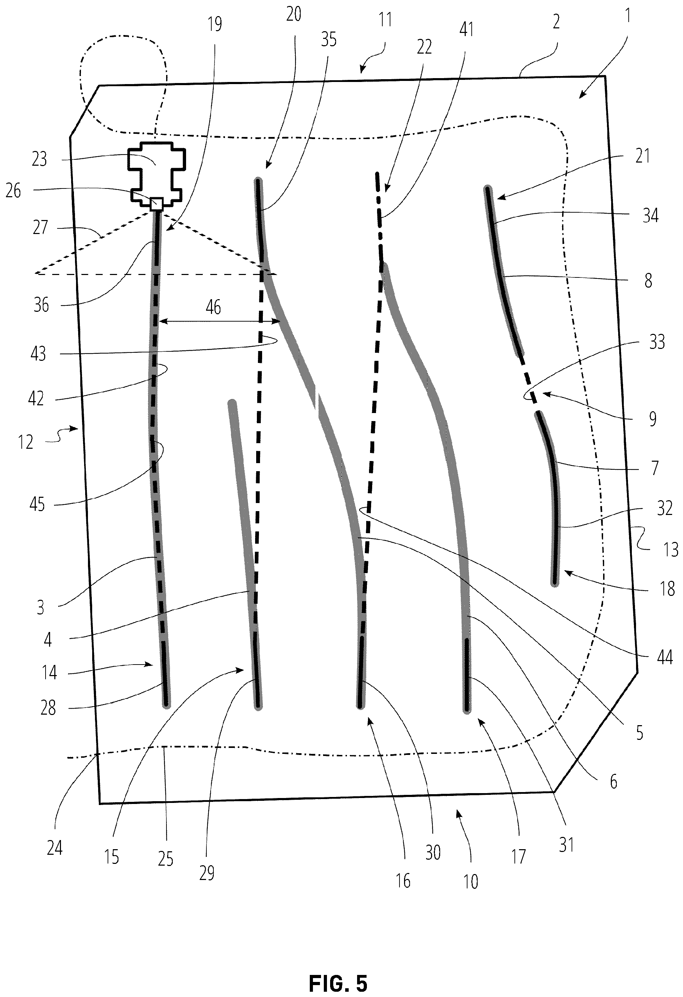

After the control unit 52 has determined the intermediate path segments 42, 43 and 44 an initial field path plan has been generated as can be seen in FIG. 4. But as can be seen in FIG. 5, not all intermediate path segments of the field path plan match with the rows of the agricultural field 1. Nevertheless, the vehicle 23 may move from the position shown in FIG. 4 and turn into the second path segment of first order 36 as shown in FIG. 5. The vehicle 23 moves then along the intermediate path segment 42 connected with the second path segment of first order 36. Thus, the method proceeds to step S112 for moving the sensor unit 26 from the second path segment of first order 36 along a first intermediate path segment (here intermediate path segment 42) out of the determined intermediate path segments 42 to 44. While the sensor unit 26 is moved from the second path segment of first order 36 to the first path segment of first order 28, the method proceeds to step S113 and the sensor unit 26 detects the row 5 that is located next to the first intermediate path segment 42. Since the sensing range 27 of the sensor unit 26 extends to the second path segment of second order 35 matching with the row 5 as can be seen in FIG. 5 the sensor unit 26 can detect the row 5 at least partly.

The method proceeds to step S114 and the control unit 52 checks whether the second intermediate path segment (here intermediate path segment 43) connected with the second path segment of second order 35 matching with the row 5 matches also with the detected row 5. As can be seen in FIG. 5, there is a mismatch between the row 5 and the second intermediate path segment 43. The control unit 52 compares the route of the row 5 with the second intermediate path segment 43 and detects the mismatch.

The method proceeds to step S115 and the control unit 52 determines a distance 46 between the first intermediate path segment 42 the sensor unit 26 is moving along and the row 5 and checks whether the distance 46 increases or decreases. As can be seen in FIG. 5, the distance 46 increases when the sensor unit 26 moves along the first intermediate path segment 42 from the second path segment 36 to the first path segment 28.

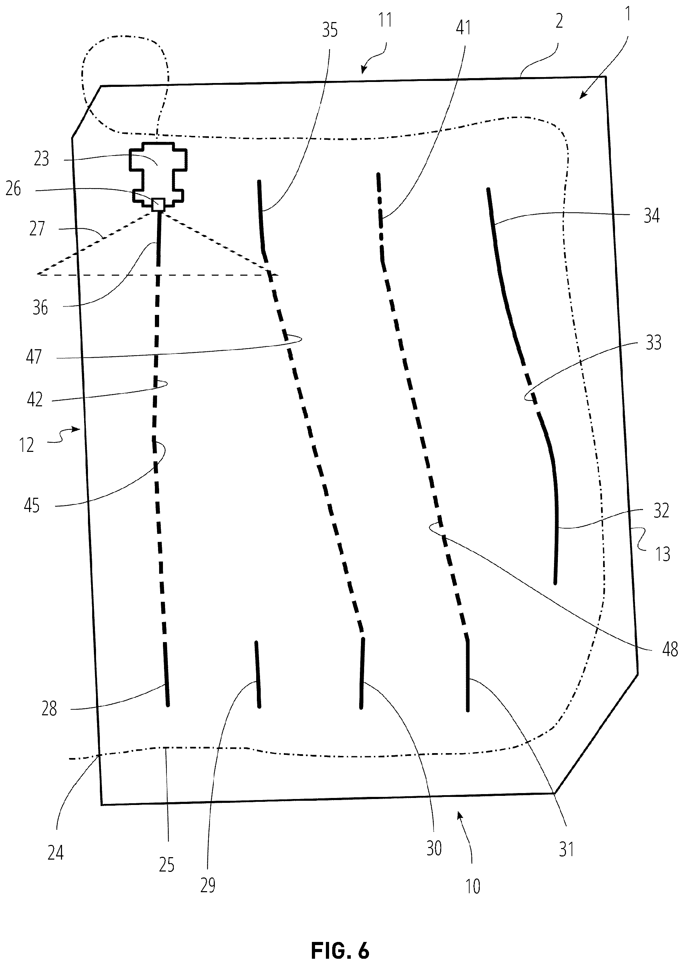

The method proceeds to step S116 to remedy the mismatch between the row 5 and the second intermediate path segment 43. Due to the increase of the distance 46, the control unit 52 reconnects the second intermediate path segment with the first path segment of third order 30 instead of the first path segment of second order 29 as indicated by the intermediate path segment 47 in FIG. 6. I. e. the order of the reconnected first path segment 30 is one order higher than the order of the initially connected first path segment 29. Depending on the degree of increase of the distance 46, the order of the reconnected first path segment can be two orders or more higher than the order of the initially connected first path segment 29, for example two orders for reconnecting the intermediate path segment 47 with the first path segment of forth order 31. Otherwise in case of a decrease of the distance 46, the control unit 52 would reconnect the second intermediate path segment with a first path segment of lower order than the order of the initially connected first path segment.

For the case that the sensor unit 26 would be moved from a first path segment to a second path segment, step S116 would be carried out by the control unit 52 analogously wherein the second intermediate path segment would be reconnected with a second path segment instead of a first path segment.

Due to the reconnection of the second intermediate path segment 47 the second intermediate path segment 47 may be connected with the same first path segment (here first path segment 30) that has been initially been connected with a third intermediate path segment (here intermediate path segment 44). Thus, the method is configured to reconnect also subsequent intermediate path segments as the intermediate path segment 44. The method proceeds to step S117 and the control unit 52 disconnects the third intermediate path segment 44 from the first path segment 30 (see in FIG. 4). Then, the second intermediate path segment 47 is connected with the first path segment 30 only (see FIG. 6).

The method proceeds to step S118 and the control unit 52 reconnects the third intermediate path segment with the first path segment 31 as indicated by the intermediate path segment 48 as depicted in FIG. 6. I. e. the order of the reconnected first path segment 31 is one order higher than the order of the first path segment 30 the third intermediate path segment 44 was initially connected with. The order of the reconnected first path segment connected with the third intermediate path segment 48 can be two orders or more higher than the order of the initially connected first path segment 30 if for example the order of the reconnected first path segment connected with the second intermediate path segment 47 is also two orders or more higher than the order of the initially connected first path segment 29. Finally, the control unit 52 corrected the mismatch and updated the field path plan as can be seen in FIG. 6.

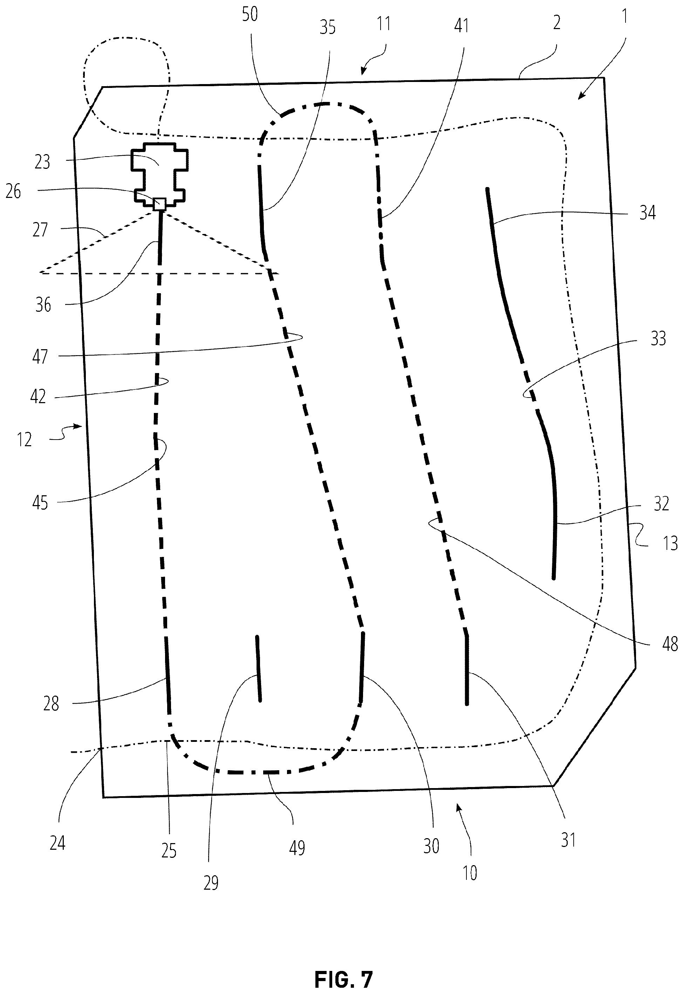

The method proceeds to step S119 and the control unit 52 determines turn path segments 49, 50 to connect first path segments 28 and 30 with each other and to connect second path segments 35 and 41 with each other as can be seen in FIG. 7. The turn path segments 49 and 50 are in the headland of the agricultural field 1 to avoid an intersection with one of the rows or the intermediate path segments. When the vehicle 23 arrives the first path segment 28 the vehicle 23 will be guided along the turn path segment 49 to reach the first path segment 30. Then, the vehicle 23 can move from the first edge 10 to the second edge 11 by moving along the reconnected second intermediate path segment 47. Second intermediate path segment 47 is connected with the second path segment 35 which itself is connected with the second path segment 41 through the turn path segment 50. Thus, the vehicle 23 can move from the second edge 11 back to the first edge 10 along the third intermediate path segment 48 connected with the second path segment 41.

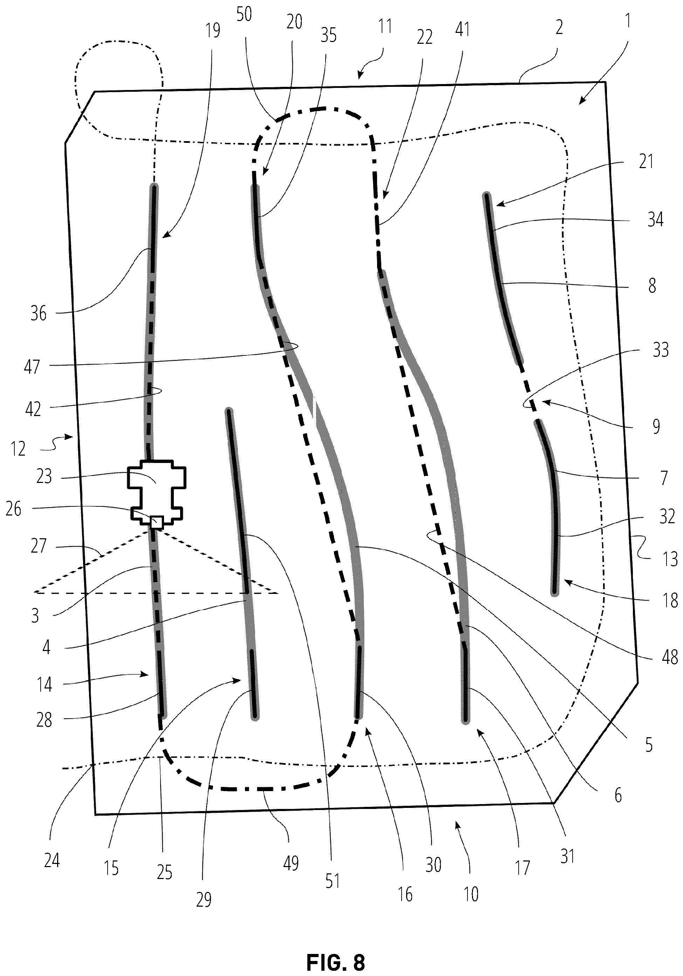

FIG. 8 shows the agricultural field 1 with the rows 3 to 8 and the path segments of the updated field path plan determined by the control unit 52 according to FIG. 7. As can be seen, the intermediate path segments 42, 47 and 48 match with the rows 3, 5 and 6 (intermediate path segments 47 and 48 match roughly with the rows 5 and 6). But in contrast to FIG. 5 showing the initial field path plan comprising intermediate path segments 43 and 44 without a match with their corresponding rows 5 and 6 the updated field path plan according to FIG. 7 could be improved. Thus, the intermediate path segments 42, 47 and 48 could be connected each with first and second path segments matching with the corresponding first and second ends of the rows 3, 5 and 6 so that each intermediate path segment 42, 47 and 48 follows the direction of its corresponding row 3, 5 and 6.

The method proceeds to step S120 for detecting rows without an intermediate path segment. As can be seen in FIG. 8, the sensor unit 26 will detect row 4 when the sensor unit 26 moves along the intermediate path segment 42. But an intermediate path segment corresponding with row 4 hasn't been determined yet according to the updated field path plan of FIG. 7. Thus, the method proceeds to step S121 and the control unit 52 detects that the field path plan doesn't comprise an intermediate path segment for the row 4 and determines an additional intermediate path segment 51 matching with the row 4. The additional intermediate path segment 51 can be determined on the fly while the sensor unit 26 moves along the intermediate path segment 42 and detects the row 4 within its sensing range 27.

The method proceeds to step S122 and the control unit 52 connects the additional intermediate path segment 51 with the first path segment 29 that is disconnected from any other intermediate path segment (see FIG. 7). Hence, the field path plan could be completed so that each intermediate path segment matches with a corresponding row of the agricultural field 1 as can be seen in FIG. 8.

Then, the method ends with step S123. The methods may restart again with step S100.

FIG. 9 shows the vehicle 23 in terms of an agricultural vehicle as a tractor. The vehicle 23 moves on the agricultural field 1. The vehicle 23 comprises the control unit 52 and the sensor unit 26 having the sensing range 27. The sensor unit 26 is connected with the control unit 52 to exchange signals. The sensing range 27 reaches down to the agricultural field 1 to detect any objects as the rows lying in the agricultural field 1.

The vehicle 23 may be an autonomous tractor controlled by the control unit 52. I. e. the vehicle 23 can speed up, decelerate and steer automatically to move through the agricultural field 1, for example along the travel path 25.

FIG. 10 shows the control unit 52 comprising an interface 55, a controller 53 and a memory 54. The control unit 52 may receive and send signals or data via the interface 55. For example, the control unit 52 may receive sensor signals of the sensor unit 26 and may send control signals for controlling the vehicle or the sensor unit 26 via the interface 55. The interface 55 may be a wireless interface or a connector. The controller 53 may store the data or signals received by the control unit 52 in the memory 54. For example, all path segments of the field path plan may be stored in the memory 54. The memory 54 may contain additional data or executable computer program products, for example in terms of a computer-implemented method, that may be retrieved, processed or carried out by the controller 53. Data or signals resulting from the processing of data or signals or from the execution of a computer program product may be stored to the memory 54 or sent to the interface 55 by the controller 53.

FIG. 11 shows a flow diagram of a method for path planning for an agricultural field 1. The method may be a computer-implemented method stored as a computer program product in the memory 54 of the control unit 52. Several steps of the method may be carried out by the controller 53 of the control unit 52. The method is described by way of example of several steps without any restriction in respect of that steps. I. e. the number or the order of steps may be adapted, for example single steps may be excluded and/or added and executed earlier or later than described. The method starts with step S100 as described above.

### LISTING OF DRAWING ELEMENTS

1 agricultural field
2 field boundary
3 row
4 row
5 row
6 row
7 row
8 row
9 gap
10 first edge
11 second edge
12 third edge
13 boundary segment
14 first end
15 first end
16 first end
17 first end
18 first end
19 second end
20 second end
21 second end
22 missing end
23 vehicle
24 entry point
25 travel path
26 sensor unit
27 sensing range
28 first path segment
29 first path segment
30 first path segment
31 first path segment
32 first path segment
33 closing path segment
34 second path segment
35 second path segment
36 second path segment
37 path
38 path
39 distance
40 distance
41 second path segment
42 intermediate path segment
43 intermediate path segment
44 intermediate path segment
45 intersection point
46 distance
47 intermediate path segment
48 intermediate path segment
49 turn path segment
50 turn path segment
51 additional intermediate path segment
52 control unit
53 controller
54 memory
55 interface

## Claims

1. A method for path planning for an agricultural field (1) comprising rows (3 - 8), the method comprising the steps:
moving a sensor unit (26) comprising a sensor having a limited sensing range (27) in the agricultural field (1) for detecting rows (3 - 8);
detecting first ends (14 - 17) of rows (3 - 6) located at a first edge (10) of the agricultural field (1);
detecting second ends (19 - 21) of rows (3, 5, 8) located at a second edge (11) of the agricultural field (1);
determining first path segments (28 - 31), each first path segment matching with a first end (14 - 17); and
determining second path segments (34, 35, 36), each second path segment matching with a second end (19 - 21);
wherein the first and second ends (14 - 17, 19 - 21) of the rows are detected by the sensor unit (26) without traversing any row (3 - 8) by moving the sensor unit (26) around the rows (3 - 8) of the agricultural field (1).

2. The method for path planning of claim 1, comprising the steps:
determining distances between the first path segments (28 - 31);
determining distances between the second path segments (34, 35, 36);
determining an additional second path segment (41) between two adjacent second path segments (34, 35) if a distance (39) between the two adjacent second path segments (34, 35) is greater than one and a half times of a distance (40) between two adjacent first path segments (29, 30).

3. The method for path planning of claim 2, wherein the two adjacent first path segments (29, 30) are of the same order as the two adjacent second path segments (34, 35).

4. The method for path planning of claim 2 or 3, comprising the steps:
Determining a number of the first path segments (28 - 31);
determining a number of the second path segments (34 - 36);
determining the additional second path segment (41) between two adjacent second path segments (34, 35) if the number of second path segments (34 - 36) is smaller than the number of first path segments (28 - 31).

5. The method for path planning of any one of claims 1 to 4, wherein a first or a second path segment is determined for an end (14 - 21) of a row if the first or the second end (14 - 17, 19 - 21) is oriented different to a movement direction of the sensor unit (26) at a moment the sensor unit (26) detected the corresponding end of the row.

6. The method for path planning of any one of claims 1 to 5, comprising the step:
determining at least two intermediate path segments (42 - 44), each intermediate path segment (42 - 44) connecting a first path segment (28 - 30) with a second path segment (35, 36, 41) of the same order as the first path segment (28 - 30).

7. The method for path planning of claim 6, comprising the step of:
Determining a reference path segment; wherein
an intermediate path segment connecting a first path segment with a second path segment of the same order as the first path segment is parallel to the reference path segment.

8. The method for path planning of claim 7, wherein
the reference path segment is an intermediate path segment connecting a first and a second path segment of a lower order than the order of the first and second path segment connected with the intermediate path segment being parallel to the reference path segment.

9. The method for path planning of claim 7 or 8, wherein
the reference path segment is determined by an extrapolation of a first path segment and an extrapolation of a second path segment of the same order as the first path segment, the extrapolation of the second path segment intersecting the extrapolation of the first path segment.

10. The method for path planning of claim 7, wherein
the reference path segment is oriented at least partly along a third edge (12) of the agricultural field (1).

11. The method for path planning of any one of claims 7 to 10, comprising the step of:
Determining a travel path (25) representing the movement of the sensor unit (26);
wherein the determination of the reference path segment is based on the travel path (25).

12. The method for path planning of any one of claims 6 to 11, comprising the steps:
Moving the sensor unit (26) along a first intermediate path segment (42) out of the determined intermediate path segments (42 - 44);
detecting a row (5) located next to the first intermediate path segment (42);
checking whether a second intermediate path segment (43) out of the determined intermediate path segments (42 - 44) matches with the detected row (5); wherein
the second intermediate path segment (43) is connected with a first or second path segment (35) matching with a first or second end (20) of the detected row (5); and
wherein the method comprises further the step in case of a mismatch between the second intermediate path segment (43) and the detected row (5):
Reconnecting the second intermediate path segment (43) with a first and a second path segment of different order (30, 35).

13. The method for path planning of claim 12, wherein
the order of the first path segment (30) of the reconnected second intermediate path segment (47) is
higher than the order of the second path segment (35) of the reconnected second intermediate path segment (47) if a distance (46) between the sensor unit (26) and the detected row (5) increases while the sensor unit (26) moves along the first intermediate path segment (42), or
lower than the order of the second path segment (35) of the reconnected second intermediate path segment (47) if a distance (46) between the sensor unit (26) and the detected row (5) decreases while the sensor unit (26) moves along the first intermediate path segment (42).

14. The method for path planning of claim 13, comprising the steps:
If a third intermediate path segment (44) out of the determined intermediate path segments (42 - 44) is connected with a first or a second path segment (30, 35) connected with the reconnected second intermediate path segment (47),
disconnecting the third intermediate path segment (44) from the first or second path segment (30) connected with both the third and the reconnected second intermediate path segment (44, 47); and
reconnecting the third intermediate path segment (44) with a first or second path segment (31) of higher order than the order of the first or second path segment (30) disconnected from the third intermediate path segment (44).

15. The method for path planning of claim 13 or 14, comprising the step:
Determining a turn path segment (49) for connecting a first path segment (28) connected with one intermediate path segment (42) with a first path segment (30) connected with another intermediate path segment (47); wherein at least one of the one and the another intermediate path segments (42, 47) is connected with a second path segment (28, 30, 35, 36).

16. The method for path planning of any one of claims 1 to 15, comprising the steps:
Detecting a row (4) without a match with an intermediate path segment;
determining an additional intermediate path segment (51) matching with the detected row (4);
connecting the additional intermediate path segment (51) with a first or second path segment (29) disconnected from any other intermediate path segment.

17. The method for path planning of claim 16, comprising the steps:
Detecting a gap (9) in a row (7, 8); and
determining a closing path segment (33) for closing the gap (9).

18. A control unit (52) configured to carry out individual steps of a method of any one of claims 1 to 17.

19. A vehicle (23) comprising a control unit (52) and a sensor unit (26), the vehicle (23) being configured to carry out a method of any one of claims 1 to 17.

## Patentansprüche

1. Verfahren zur Wegplanung für ein landwirtschaftliches Feld (1), das Reihen (3-8) umfasst, wobei das Verfahren die Schritte umfasst:
Bewegen einer Sensoreinheit (26), die einen Sensor mit einem begrenzten Erfassungsbereich (27) umfasst, in dem landwirtschaftlichen Feld (1) zum Erkennen von Reihen (3-8);
Erkennen erster Enden (14-17) von Reihen (3-6), die an einem ersten Rand (10) des landwirtschaftlichen Feldes (1) angeordnet sind;
Erkennen zweiter Enden (19-21) von Reihen (3, 5, 8), die an einem zweiten Rand (11) des landwirtschaftlichen Feldes (1) angeordnet sind;
Bestimmen erster Wegsegmente (28-31), wobei jedes erste Wegsegment einem ersten Ende (14-17) zugeordnet ist; und
Bestimmen zweiter Wegsegmente (34, 35, 36), wobei jedes zweite Wegsegment einem zweiten Ende (19-21) zugeordnet ist;
wobei die ersten und zweiten Enden (14-17, 19-21) der Reihen durch die Sensoreinheit (26) erkannt werden, ohne eine der Reihen (3-8) zu durchqueren, indem die Sensoreinheit (26) um die Reihen (3-8) des landwirtschaftlichen Feldes (1) herum bewegt wird.

2. Verfahren zur Wegplanung nach Anspruch 1, ferner umfassend die Schritte:
Bestimmen von Abständen zwischen den ersten Wegsegmenten (28-31);
Bestimmen von Abständen zwischen den zweiten Wegsegmenten (34, 35, 36);
Bestimmen eines zusätzlichen zweiten Wegsegments (41) zwischen zwei benachbarten zweiten Wegsegmenten (34, 35), wenn ein Abstand (39) zwischen den zwei benachbarten zweiten Wegsegmenten (34, 35) größer ist als das Eineinhalbfache eines Abstands (40) zwischen zwei benachbarten ersten Wegsegmenten (29, 30).

3. Verfahren zur Wegplanung nach Anspruch 2, wobei die zwei benachbarten ersten Wegsegmente (29, 30) dieselbe Ordnung wie die zwei benachbarten zweiten Wegsegmente (34, 35) aufweisen.

4. Verfahren zur Wegplanung nach Anspruch 2 oder 3, ferner umfassend die Schritte:
Bestimmen einer Anzahl der ersten Wegsegmente (28-31);
Bestimmen einer Anzahl der zweiten Wegsegmente (34-36);
Bestimmen des zusätzlichen zweiten Wegsegments (41) zwischen zwei benachbarten zweiten Wegsegmenten (34, 35), wenn die Anzahl der zweiten Wegsegmente (34-36) kleiner ist als die Anzahl der ersten Wegsegmente (28-31).

5. Verfahren zur Wegplanung nach einem der Ansprüche 1 bis 4, wobei ein erstes oder ein zweites Wegsegment für ein Ende (14-21) einer Reihe bestimmt wird, wenn das erste oder das zweite Ende (14-17, 19-21) unterschiedlich zu einer Bewegungsrichtung der Sensoreinheit (26) zu dem Zeitpunkt ausgerichtet ist, zu dem die Sensoreinheit (26) das entsprechende Ende der Reihe erkannt hat.

6. Verfahren zur Wegplanung nach einem der Ansprüche 1 bis 5, ferner umfassend den Schritt:
Bestimmen von mindestens zwei Zwischenwegsegmenten (42-44), wobei jedes Zwischenwegsegment (42-44) ein erstes Wegsegment (28-30) mit einem zweiten Wegsegment (35, 36, 41) derselben Ordnung wie das erste Wegsegment (28-30) verbindet.

7. Verfahren zur Wegplanung nach Anspruch 6, ferner umfassend den Schritt:
Bestimmen eines Referenzwegsegments; wobei
ein Zwischenwegsegment, das ein erstes Wegsegment mit einem zweiten Wegsegment derselben Ordnung wie das erste Wegsegment verbindet, parallel zu dem Referenzwegsegment ist.

8. Verfahren zur Wegplanung nach Anspruch 7, wobei das Referenzwegsegment ein Zwischenwegsegment ist, das ein erstes und ein zweites Wegsegment niedrigerer Ordnung als die Ordnung des ersten und zweiten Wegsegments verbindet, die durch das zu dem Referenzwegsegment parallele Zwischenwegsegment verbunden sind.

9. Verfahren zur Wegplanung nach Anspruch 7 oder 8, wobei
das Referenzwegsegment durch eine Extrapolation eines ersten Wegsegments und eine Extrapolation eines zweiten Wegsegments derselben Ordnung wie das erste Wegsegment bestimmt wird, wobei die Extrapolation des zweiten Wegsegments die Extrapolation des ersten Wegsegments schneidet.

10. Verfahren zur Wegplanung nach Anspruch 7, wobei
das Referenzwegsegment zumindest teilweise entlang eines dritten Randes (12) des landwirtschaftlichen Feldes (1) ausgerichtet ist.

11. Verfahren zur Wegplanung nach einem der Ansprüche 7 bis 10, ferner umfassend den Schritt:
Bestimmen eines Fahrwegs (25), der die Bewegung der Sensoreinheit (26) repräsentiert;
wobei die Bestimmung des Referenzwegsegments auf dem Fahrweg (25) basiert.

12. Verfahren zur Wegplanung nach einem der Ansprüche 6 bis 11, ferner umfassend die Schritte:
Bewegen der Sensoreinheit (26) entlang eines ersten Zwischenwegsegments (42) aus den bestimmten Zwischenwegsegmenten (42-44);
Erkennen einer Reihe (5), die neben dem ersten Zwischenwegsegment (42) angeordnet ist;
Prüfen, ob ein zweites Zwischenwegsegment (43) aus den bestimmten Zwischenwegsegmenten (42-44) der erkannten Reihe (5) zugeordnet ist; wobei
das zweite Zwischenwegsegment (43) mit einem ersten oder zweiten Wegsegment (35) verbunden ist, das einem ersten oder zweiten Ende (20) der erkannten Reihe (5) zugeordnet ist; und
wobei das Verfahren im Falle einer Nichtübereinstimmung zwischen dem zweiten Zwischenwegsegment (43) und der erkannten Reihe (5) ferner den Schritt umfasst:
Wiederverbinden des zweiten Zwischenwegsegments (43) mit einem ersten und einem zweiten Wegsegment unterschiedlicher Ordnung (30, 35).

13. Verfahren zur Wegplanung nach Anspruch 12, wobei
die Ordnung des ersten Wegsegments (30) des wiederverbundenen zweiten Zwischenwegsegments (47) größer ist als die Ordnung des zweiten Wegsegments (35) des wiederverbundenen zweiten Zwischenwegsegments (47),
wenn ein Abstand (46) zwischen der Sensoreinheit (26) und der erkannten Reihe (5) zunimmt, während sich die Sensoreinheit (26) entlang des ersten Zwischenwegsegments (42) bewegt, oder
kleiner ist als die Ordnung des zweiten Wegsegments (35) des wiederverbundenen zweiten Zwischenwegsegments (47),
wenn der Abstand (46) zwischen der Sensoreinheit (26) und der erkannten Reihe (5) abnimmt, während sich die Sensoreinheit (26) entlang des ersten Zwischenwegsegments (42) bewegt.

14. Verfahren zur Wegplanung nach Anspruch 13, ferner umfassend die Schritte:
wenn ein drittes Zwischenwegsegment (44) aus den bestimmten Zwischenwegsegmenten (42-44) mit einem ersten oder zweiten Wegsegment (30, 35) verbunden ist, das mit dem wiederverbundenen zweiten Zwischenwegsegment (47) verbunden ist,
Trennen des dritten Zwischenwegsegments (44) von dem ersten oder zweiten Wegsegment (30), das sowohl mit dem dritten als auch mit dem wiederverbundenen zweiten Zwischenwegsegment (44, 47) verbunden ist; und
Wiederverbinden des dritten Zwischenwegsegments (44) mit einem ersten oder zweiten Wegsegment (31) höherer Ordnung als die Ordnung des ersten oder zweiten Wegsegments (30), das von dem dritten Zwischenwegsegment (44) getrennt wurde.

15. Verfahren zur Wegplanung nach Anspruch 13 oder 14, ferner umfassend den Schritt:
Bestimmen eines Wendewegsegments (49) zum Verbinden eines ersten Wegsegments (28), das mit einem Zwischenwegsegment (42) verbunden ist, mit einem ersten Wegsegment (30), das mit einem anderen Zwischenwegsegment (47) verbunden ist;
wobei mindestens eines des einen und des anderen Zwischenwegsegments (42, 47) mit einem zweiten Wegsegment (28, 30, 35, 36) verbunden ist.

16. Verfahren zur Wegplanung nach einem der Ansprüche 1 bis 15, ferner umfassend die Schritte: Erkennen einer Reihe (4) ohne Zuordnung zu einem Zwischenwegsegment;
Bestimmen eines zusätzlichen Zwischenwegsegments (51), das der erkannten Reihe (4) zugeordnet ist;
Verbinden des zusätzlichen Zwischenwegsegments (51) mit einem ersten oder zweiten Wegsegment (29), das von jedem anderen Zwischenwegsegment getrennt ist.

17. Verfahren zur Wegplanung nach Anspruch 16, ferner umfassend die Schritte:
Erkennen einer Lücke (9) in einer Reihe (7, 8); und
Bestimmen eines Schließwegsegments (33) zum Schließen der Lücke (9).

18. Steuereinheit (52), die dazu ausgelegt ist, einzelne Schritte eines Verfahrens nach einem der Ansprüche 1 bis 17 auszuführen.

19. Fahrzeug (23), umfassend eine Steuereinheit (52) und eine Sensoreinheit (26), wobei das Fahrzeug (23) dazu ausgelegt ist, ein Verfahren nach einem der Ansprüche 1 bis 17 auszuführen.

## Revendications

1. Procédé de planification de trajet pour un champ agricole (1) comprenant des lignes (3-8), le procédé comprenant les étapes suivantes :
le déplacement d'une unité de détection (26) comprenant un capteur ayant une plage de détection limitée (27) dans le champ agricole (1) pour détecter des lignes (3-8) ;
la détection de premières extrémités (14-17) de lignes (3-6) situées au niveau d'un premier bord (10) du champ agricole (1) ;
la détection de secondes extrémités (19-21) de lignes (3, 5, 8) situées au niveau d'un deuxième bord (11) du champ agricole (1) ;
la détermination de premiers segments de trajet (28-31), chaque premier segment de trajet correspondant à une première extrémité (14-17) ; et
la détermination de deuxièmes segments de trajet (34, 35, 36), chaque deuxième segment de trajet correspondant à une seconde extrémité (19-21) ;
dans lequel les première et seconde extrémités (14-17, 19-21) des lignes sont détectées par l'unité de détection (26) sans traverser aucune ligne (3-8) en déplaçant l'unité de détection (26) autour des lignes (3-8) du champ agricole (1).

2. Procédé de planification de trajet selon la revendication 1, comprenant les étapes suivantes :
la détermination de distances entre les premiers segments de trajet (28-31) ;
la détermination de distances entre les deuxièmes segments de trajet (34, 35, 36) ;
la détermination d'un second segment de trajet supplémentaire (41) entre deux deuxièmes segments de trajet adjacents (34, 35) si une distance (39) entre les deux deuxièmes segments de trajet adjacents (34, 35) est supérieure à une fois et demie une distance (40) entre deux premiers segments de trajet adjacents (29, 30).

3. Procédé de planification de trajet selon la revendication 2, dans lequel les deux premiers segments de trajet adjacents (29, 30) sont du même ordre que les deux deuxièmes segments de trajet adjacents (34, 35).

4. Procédé de planification de trajet selon la revendication 2 ou 3, comprenant les étapes suivantes :
la détermination d'un nombre des premiers segments de trajet (28-31) ;
la détermination d'un nombre des deuxièmes segments de trajet (34-36) ;
la détermination du second segment de trajet supplémentaire (41) entre deux deuxièmes segments de trajet adjacents (34, 35) si le nombre de deuxièmes segments de trajet (34-36) est inférieur au nombre de premiers segments de trajet (28-31).

5. Procédé de planification de trajet selon l'une quelconque des revendications 1 à 4, dans lequel un premier ou un deuxième segment de trajet est déterminé pour une extrémité (14-21) d'une ligne si la première ou la seconde extrémité (14-17, 19-21) est orientée différemment d'une direction de déplacement de l'unité de détection (26) à un moment où l'unité de détection (26) a détecté l'extrémité correspondante de la ligne.

6. Procédé de planification de trajet selon l'une quelconque des revendications 1 à 5, comprenant l'étape suivante :
la détermination d'au moins deux segments de trajet intermédiaires (42-44), chaque segment de trajet intermédiaire (42-44) reliant un premier segment de trajet (28-30) à un deuxième segment de trajet (35, 36, 41) du même ordre que le premier segment de trajet (28-30) .

7. Procédé de planification de trajet selon la revendication 6, comprenant l'étape suivante :
la détermination d'un segment de trajet de référence ;
dans lequel
un segment de trajet intermédiaire reliant un premier segment de trajet à un deuxième segment de trajet du même ordre que le premier segment de trajet est parallèle au segment de trajet de référence.

8. Procédé de planification de trajet selon la revendication 7, dans lequel
le segment de trajet de référence est un segment de trajet intermédiaire reliant un premier et un deuxième segment de trajet d'un ordre inférieur à l'ordre du premier et du deuxième segment de trajet reliés au segment de trajet intermédiaire parallèle au segment de trajet de référence.

9. Procédé de planification de trajet selon la revendication 7 ou 8, dans lequel
le segment de trajet de référence est déterminé par extrapolation d'un premier segment de trajet et par extrapolation d'un deuxième segment de trajet du même ordre que le premier segment de trajet, l'extrapolation du deuxième segment de trajet croisant l'extrapolation du premier segment de trajet.

10. Procédé de planification de trajet selon la revendication 7, dans lequel
le segment de trajet de référence est orienté au moins partiellement le long d'un troisième bord (12) du champ agricole (1).

11. Procédé de planification de trajet selon l'une quelconque des revendications 7 à 10, comprenant l'étape suivante :
la détermination d'un trajet de déplacement (25) représentant le déplacement de l'unité de détection (26) ;
dans lequel la détermination du segment de trajet de référence est basée sur le trajet (25).

12. Procédé de planification de trajet selon l'une quelconque des revendications 6 à 11, comprenant les étapes suivantes :
le déplacement de l'unité de détection (26) le long d'un premier segment de trajet intermédiaire (42) parmi les segments de trajet intermédiaires déterminés (42-44) ;
la détection d'une ligne (5) située à côté du premier segment de trajet intermédiaire (42) ;
la vérification de si un deuxième segment de trajet intermédiaire (43) parmi les segments de trajet intermédiaires déterminés (42-44) correspond à la ligne détectée (5) ; dans lequel
le deuxième segment de trajet intermédiaire (43) est relié à un premier ou un deuxième segment de trajet (35) correspondant à une première ou une seconde extrémité (20) de la ligne détectée (5) ; et
dans lequel le procédé comprend en outre l'étape suivante en cas de discordance entre le deuxième segment de trajet intermédiaire (43) et la ligne détectée (5) :
la liaison à nouveau du deuxième segment de trajet intermédiaire (43) avec un premier et un deuxième segment de trajet d'ordre différent (30, 35).

13. Procédé de planification de trajet selon la revendication 12, dans lequel
l'ordre du premier segment de trajet (30) du deuxième segment de trajet intermédiaire relié à nouveau (47) est supérieur à l'ordre du second segment de trajet (35) du deuxième segment de trajet intermédiaire relié à nouveau (47) si une distance (46) entre l'unité de détection (26) et la ligne détectée (5) augmente alors que l'unité de détection (26) se déplace le long du premier segment de trajet intermédiaire (42), ou
inférieur à l'ordre du second segment de trajet (35) du deuxième segment de trajet intermédiaire relié à nouveau (47) si une distance (46) entre l'unité de détection (26) et la ligne détectée (5) diminue alors que l'unité de détection (26) se déplace le long du premier segment de trajet intermédiaire (42).

14. Procédé de planification de trajet selon la revendication 13, comprenant les étapes suivantes :
si un troisième segment de trajet intermédiaire (44) parmi les segments de trajet intermédiaires déterminés (42-44) est relié à un premier ou un second segment de trajet (30, 35) relié au deuxième segment de trajet intermédiaire relié à nouveau (47),
la suppression de la liaison du troisième segment de trajet intermédiaire (44) du premier ou du second segment de trajet (30) relié à la fois au troisième et au deuxième segment de trajet intermédiaire lié à nouveau (44, 47) ; et
la liaison à nouveau du troisième segment de trajet intermédiaire (44) à un premier ou un deuxième segment de trajet (31) d'ordre supérieur à l'ordre du premier ou du second segment de trajet (30) qui n'est plus lié au troisième segment de trajet intermédiaire (44).

15. Procédé de planification de trajet selon la revendication 13 ou 14, comprenant l'étape suivante :
la détermination d'un segment de trajet de virage (49) pour relier un premier segment de trajet (28) relié à un segment de trajet intermédiaire (42) à un premier segment de trajet (30) relié à un autre segment de trajet intermédiaire (47) ; dans lequel au moins l'un de l'un ou l'autre des segments de trajet intermédiaires (42, 47) est relié à un deuxième segment de trajet (28, 30, 35, 36).

16. Procédé de planification de trajet selon l'une quelconque des revendications 1 à 15, comprenant les étapes suivantes : la détection d'une ligne (4) sans correspondance avec un segment intermédiaire de trajet ; la détermination d'un segment de trajet intermédiaire supplémentaire (51) correspondant à la ligne détectée (4) ;
la liaison du segment de trajet intermédiaire supplémentaire (51) avec un premier ou un deuxième segment de trajet (29) qui n'est plus lié à aucun autre segment de trajet intermédiaire.

17. Procédé de planification de trajet selon la revendication 16, comprenant les étapes suivantes :
la détection d'un espace (9) dans une ligne (7, 8) ; et
la détermination d'un segment de trajet de fermeture (33) pour fermer l'espace (9).

18. Unité de commande (52) configurée pour exécuter des étapes individuelles d'un procédé selon l'une quelconque des revendications 1 à 17.

19. Véhicule (23) comprenant une unité de commande (52) et une unité de détection (26), le véhicule (23) étant configuré pour mettre en œuvre un procédé selon l'une quelconque des revendications 1 à 17.
